# DEMANDE DE BREVET EUROPEEN

(11) **EP 3 342 652 A1**
(43) Date de publication de la demande: **04.07.2018**
(21) Numéro de dépôt: 17208022.8
(22) Date de dépôt: 18.12.2017
(51) Int. Cl.: B60S 1/04

(54) **DISPOSITIF D'ESSUIE-GLACE AVANT POUR VEHICULE AUTOMOBILE ET PROCEDE DE MONTAGE**

(30) Priorité: 02.01.2017 FR 1750007
(71) Demandeur: Valeo Systèmes d'Essuyage, 78322 Le Mesnil Saint Denis (FR)
(72) Inventeur: BROSZNIOWSKI, François, 78322 LE MESNIL SAINT DENIS (FR); GIRAUD, Frédéric, 78322 LE MESNIL SAINT DENIS (FR); TREBOUET, Marcel, 78322 Le Mesnil Saint Denis (FR)
(74) Mandataire: Valeo Systèmes d'Essuyage

(57) **Abrégé**

L'invention a pour objet un dispositif d'essuie-glace (1) pour panneau vitré avant de véhicule automobile comprenant au moins un bloc moteur (2), des moyens d'entrainement (4) et une platine de support (10), ledit bloc moteur (2) comportant des premiers éléments de fixation (12) aptes à coopérer avec des deuxièmes éléments de fixation (13) ménagés dans la platine de support (10), de manière à adopter une position de verrouillage par insertion puis rotation d'un quart de tour autour de l'axe Z de l'arbre d'entrainement (3) dudit bloc moteur (2)

## Description

La présente invention se rapporte au domaine des dispositifs d'essuie-glace des panneaux vitrés d'un véhicule automobile. L'invention concerne plus particulièrement une structure de dispositif d'essuie-glace avant d'un véhicule automobile et son procédé de montage.

Les dispositifs d'essuie-glace pour panneau vitré arrière ou panneau vitré avant de véhicule automobile diffèrent les uns des autres. Un dispositif d'essuie-glace arrière comporte un arbre d'entrainement d'un unique bras d'essuie-glace piloté et entrainé en rotation par un moteur d'essuie-glace électrique. Une platine de support du bloc moteur et de l'arbre d'entrainement est fixée directement sur la face interne de l'ouvrant arrière du véhicule par l'intermédiaire d'un assemblage vis-écrou apte à immobiliser le dispositif d'essuie-glace par rapport au panneau vitré, de préférence par trois points de fixation.

Les dispositifs d'essuie-glace avant, aptes à supporter deux bras d'essuie-glace, sont plus complexes. Lesdits bras sont chacun disposés aux extrémités d'une structure tubulaire ou d'une structure constituée d'une platine de support en plastique injecté, lesquelles sont rattachées au corps du véhicule. Lesdites structures servent à la fois de support à la timonerie apte à générer, par un mécanisme d'entrainement simultané, le mouvement des bras d'essuie-glace et de support au dispositif de commande dont fait partie le moteur électrique. Dans le cas d'une structure comportant une platine de support, le bloc moteur est généralement monté sur ladite platine par fixation de trois vis. Ce type de fixation par vissage est coûteux, nécessite une pluralité d'opérations pour la fixation de chacune des vis et présente le risque d'une fiabilité aléatoire lorsque le dispositif est soumis aux contraintes et vibrations produites au cours du fonctionnement du moteur électrique.

L'invention a pour objectif de remédier aux inconvénients précités en proposant une structure alternative d'un dispositif d'essuie-glace pour un panneau vitré avant d'un véhicule automobile, et au sein de laquelle la fixation du moteur d'essuie-glace à la platine de support est obtenue par encliquetage élastique, notamment par coopération complémentaire de premiers éléments de fixation du bloc moteur avec des deuxièmes éléments de fixation ménagés dans la platine de support. L'invention a pour second objectif de proposer un procédé de montage dudit dispositif d'essuie-glace comportant au moins une étape de positionnement et une étape de verrouillage du bloc moteur à la platine de support par un mouvement de rotation. Cette structure sans vissage assure un positionnement ajusté du bloc moteur sur la platine de support et améliore la fiabilité du dispositif selon l'invention.

L'invention a pour premier objet un dispositif d'essuie-glace pour panneau vitré avant de véhicule automobile comprenant au moins un bloc moteur comportant au moins un carter en saillie duquel s'étend un arbre d'entrainement entraîné en rotation en sortie d'un moteur logé dans le carter, des moyens d'entrainement configurés pour mettre en mouvement deux bras d'essuie-glace en fonction du mouvement de rotation de l'arbre d'entraînement, et une platine de support configurée pour supporter d'une part le bloc moteur et d'autre part des tiges de support de bras d'essuie-glace, la platine comportant par ailleurs des organes de rattachement au corps du véhicule.

Selon l'invention, le bloc moteur et la platine de support comportent des éléments de fixation configurés pour coopérer par encliquetage élastique sous l'effet d'une rotation relative du carter du bloc moteur par rapport à la platine de support.

Selon différentes caractéristiques de l'invention, prises seules ou en combinaison, on peut prévoir que :
- le dispositif comporte des premiers et deuxièmes éléments de fixation, lesdits premiers éléments de fixation étant ménagés dans le carter pour coopérer avec les deuxièmes éléments de fixation ménagés dans la platine de support ;
- les premiers éléments de fixation du bloc moteur sont constitués d'au moins un élément en saillie du carter et comportent une portion cylindrique qui prolonge ce carter et sur le pourtour de laquelle s'étend un collet formant butée d'arrêt cylindrique. Le collet formant la butée d'arrêt peut être venu de matière avec la portion cylindrique ou bien être réalisé séparément puis emmanché sur cette portion cylindrique. Lesdits premiers éléments de fixation sont rapportés sur le carter du bloc moteur par emmanchement en force dans des fûts cylindriques de réception ;
- le bloc moteur comporte en outre, sur la face du carter sur laquelle sont ménagés les premiers éléments de fixation, un fût cylindrique de section circulaire pour le guidage en rotation de son arbre d'entrainement autour de l'axe Z. Un orifice complémentaire servant à faire passer l'axe à travers la platine est suffisamment large pour permettre un jeu de l'axe et dudit fût cylindrique à l'intérieur dudit orifice complémentaire. De préférence, l'orifice complémentaire est de forme circulaire et de diamètre au moins égal au diamètre extérieur dudit fût cylindrique ;
- les deuxièmes éléments de fixation ménagés sur la platine de support sont constitués d'au moins un orifice de positionnement configuré pour coopérer avec l'au moins un élément en saillie du carter ;
- l'au moins un orifice de positionnement desdits deuxièmes éléments de fixation comporte deux lumières de dimensions différentes et débouchant l'une dans la continuité de l'autre, de manière à former un chemin de guidage continu de direction d'allongement X et de largeur variable le long de cette direction d'allongement;
- une première lumière dudit orifice de positionnement présente une largeur au moins égale au diamètre extérieur du collet formant butée d'arrêt des premiers éléments de fixation du bloc moteur, ladite première lumière étant prolongée par la seconde lumière qui présente une largeur inférieure à la largeur de la première lumière mais au moins égal au diamètre extérieur de la portion cylindrique desdits premiers éléments de fixation ;
- le bloc moteur comporte au moins trois premiers éléments de fixation aptes à s'insérer respectivement dans un orifice de positionnement de la platine de support ;
- les trois premiers éléments de fixation sont régulièrement répartis angulairement autour de l'arbre d'entrainement du bloc moteur ;
- la platine de support est constituée d'une matière plastique adaptée pour permettre une coopération des premiers et deuxièmes éléments de fixation par déformation et encliquetage élastique ;
- la platine de support comporte un élément d'encliquetage formé par une portion d'étranglement entre la première et la seconde lumière.
- la platine de support comporte, en outre, un élément d'encliquetage formé par une lame souple. La lame souple peut être articulée sur la platine de support autour d'un axe sensiblement parallèle à la direction de l'arbre d'entrainement, et elle peut être articulée pour coopérer par encliquetage avec un plot de butée agencé en saillie du carter du bloc moteur.
- le bloc moteur peut comporter au moins un fût cylindrique creux, apte à recevoir une vis d'arrêt.

L'invention a pour second objet un procédé de montage d'un dispositif d'essuie-glace pour panneau vitré avant de véhicule automobile selon l'invention, comprenant au moins :
- une étape d'insertion, par translation selon une première direction, des premiers éléments de fixation du bloc moteur dans les deuxièmes éléments de fixation de la platine de support,
- une étape de verrouillage par encliquetage élastique des éléments de fixation, par rotation relative du bloc moteur par rapport à la platine, autour d'un axe parallèle à la première direction de translation.

Selon une caractéristique avantageuse de l'invention, l'étape d'insertion se fait par translation selon une direction parallèle à l'axe de l'arbre d'entrainement.

Au cours du procédé de montage, lors de l'étape d'insertion par translation, les premiers éléments de fixation ménagés sur le bloc moteur peuvent être insérés dans chaque première lumière des deuxièmes éléments de fixation de la platine de support et, lors de l'étape de verrouillage, chaque premier élément de fixation peut coopérer avec une seconde lumière des deuxièmes éléments de fixation de la platine de support.

En outre, l'étape de verrouillage peut consister en l'encliquetage élastique d'une lame élastique ménagée sur la face de la platine en regard du carter et d'un plot de butée ménagé en saillie du carter.

Le procédé de montage peut, en outre, contenir une étape additionnelle de serrage de la platine contre le carter du bloc moteur, par l'intermédiaire d'une vis d'arrêt dans un fût complémentaire agencé sur le carter du bloc moteur.

D'autres caractéristiques et avantages de l'invention apparaitront plus clairement à la lecture de la description détaillée d'un mode de réalisation de l'invention, donnée ci-après à titre d'exemple illustratif et non limitatif et s'appuyant sur les figures annexées, dans lesquelles on a illustré le dispositif d'essuie-glace pour panneau vitré avant de véhicule automobile selon l'invention, et parmi lesquelles :
- la figure 1 est une vue en perspective, de dessus, du dispositif d'essuie-glace selon un mode de réalisation de l'invention, rendant notamment visible un bloc moteur fixé sur une platine de support configurée pour supporter par ailleurs des moyens de fixation à une structure du véhicule et des arbres d'entrainement des balais d'essuie-glace, ici non représentés;
- la figure 2 est une vue de détail, en perspective, d'éléments de fixation du bloc moteur sur la platine de support, en particulier un premier élément de fixation ménagé dans le bloc moteur coopérant avec une deuxième élément de fixation ménagé dans la platine de support ;
- la figure 3 est une vue de dessus des éléments de fixation illustrés sur la figure 2, avec des éléments additionnels participant à l'encliquetage élastique de la position du bloc moteur par rapport à la platine de support ;
- les figures 4a à 4c sont des vues, en perspective, de l'agencement conforme à l'invention, au sein duquel le carter du bloc moteur porte des premiers éléments de fixation aptes à coopérer avec des deuxièmes éléments de fixation de la platine, lesdites vues présentant les étapes successives de montage par insertion et verrouillage desdits moyens propres au dispositif selon l'invention;
- la figure 5 est une vue détaillée en perspective du dispositif selon l'invention en position de verrouillage, ladite position étant sécurisée par serrage d'une vis d'arrêt.

Il est nécessaire de noter que si les figures exposent l'invention de manière détaillée pour sa mise en oeuvre, elles peuvent également servir à mieux définir l'invention le cas échéant. On comprendra également que le mode de réalisation de l'invention illustré par les figures est donné à titre d'exemple non limitatif. Par conséquent, d'autres configurations du dispositif selon l'invention peuvent être réalisées, notamment par variations de l'agencement, de la répartition et du dimensionnement des premiers éléments de fixation du bloc moteur et des deuxièmes éléments de fixation de la platine constitutifs du dispositif d'essuie-glace selon l'invention.

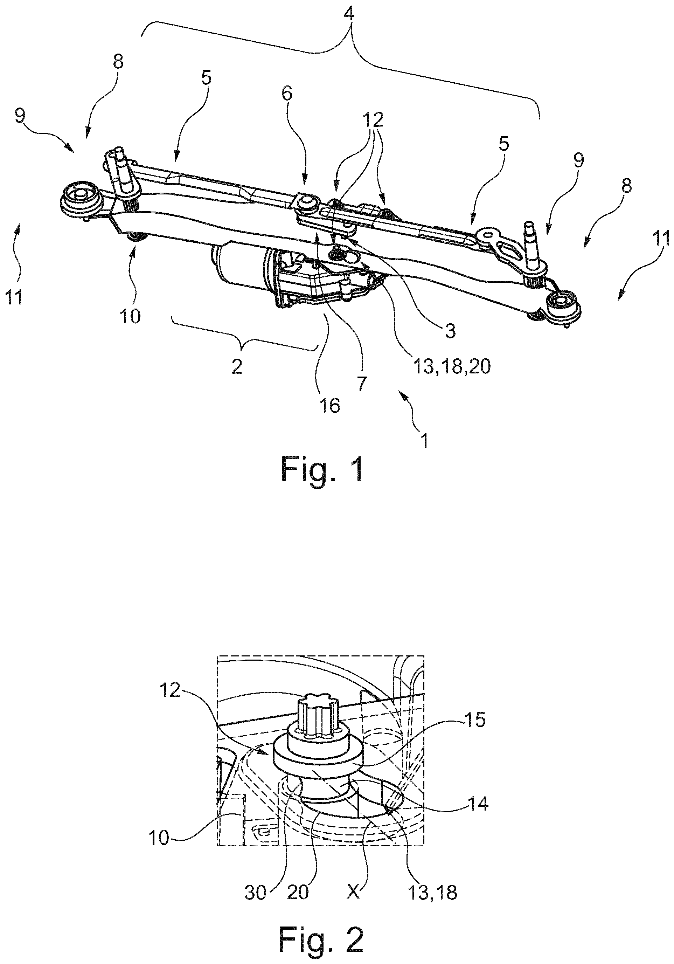

La figure 1 illustre le dispositif d'essuie-glace 1 pour panneau vitré avant de véhicule automobile essentiellement constitué d'un bloc moteur 2, d'une platine de support 10 et de moyens d'entrainement 4. Le dispositif d'essuie-glace 1 est présenté dans son ensemble, après agencement de chaque élément de structure les uns par rapport aux autres, en particulier après positionnement et solidarisation du bloc moteur 2 sur la platine de support 10.

Le bloc moteur 2 ou bloc de commande du dispositif 1, formé au moins d'un moteur électrique et le cas échéant d'un réducteur, ainsi que d'un arbre d'entrainement 3 et d'une enveloppe creuse de type carter 16, est apte à entrainer une structure de type bielle/manivelle de manière à assurer la transformation du mouvement rotatif du moteur électrique en mouvement alternatif pour les bras et balais d'essuie-glace conducteur et passager.

Le moteur peut être commandé pour faire tourner l'arbre d'entrainement dans un sens ou dans un autre, de manière à répercuter cette rotation aux balais d'essuie-glace, pour leur balayage, dans un sens ou dans l'autre, sur la surface vitrée. L'arbre d'entraînement 3 débouche du carter sur une face de fixation 32 du carter 16, cette face de fixation 32 du carter étant tournée vers la platine de support 10.

Les moyens d'entrainement 4, ou timonerie, sont constitués de deux articulations 5 conducteur et passager de forme longitudinale reliées l'une à l'autre par leur première extrémité en un point central de jonction 6. Une bielle de commande 7 assure la connexion entre le point de jonction 6 et l'arbre d'entrainement 3 dudit bloc moteur 2.

La platine de support 10, de forme sensiblement longitudinale, est apte à supporter d'une part, à chaque extrémité de sa première face dite supérieure située en regard des et parallèlement aux moyens d'entrainement 4, une tige de support d'un bras d'essuie-glace (non visible sur cette figure) et des organes de rattachement 11, points d'ancrage conducteur et passager, au corps du véhicule et d'autre part, sur sa seconde face dite inférieure, le bloc moteur 2. Chaque tige de support 8 est reliée par l'intermédiaire d'une bielle secondaire 9 à chaque seconde extrémité libre desdites articulations 5 conducteur et passager de manière à permettre la mise en mouvement des bras d'essuie-glace.

La fixation du bloc moteur 2 à la platine 10 est assurée par coopération par encliquetage élastique de premiers éléments de fixation 12 portés par la face de fixation 32 du carter 16 avec des deuxièmes éléments de fixation 13 ménagés dans la platine de support 10. Il sera décrit par la suite un mode de réalisation desdits éléments de fixation associés à un procédé de montage du moteur sur la platine de support, ledit procédé proposant le montage simplifié dudit monteur par deux mouvements plutôt que par une multitude de mouvements qu'impliquent des fixations par vissage.

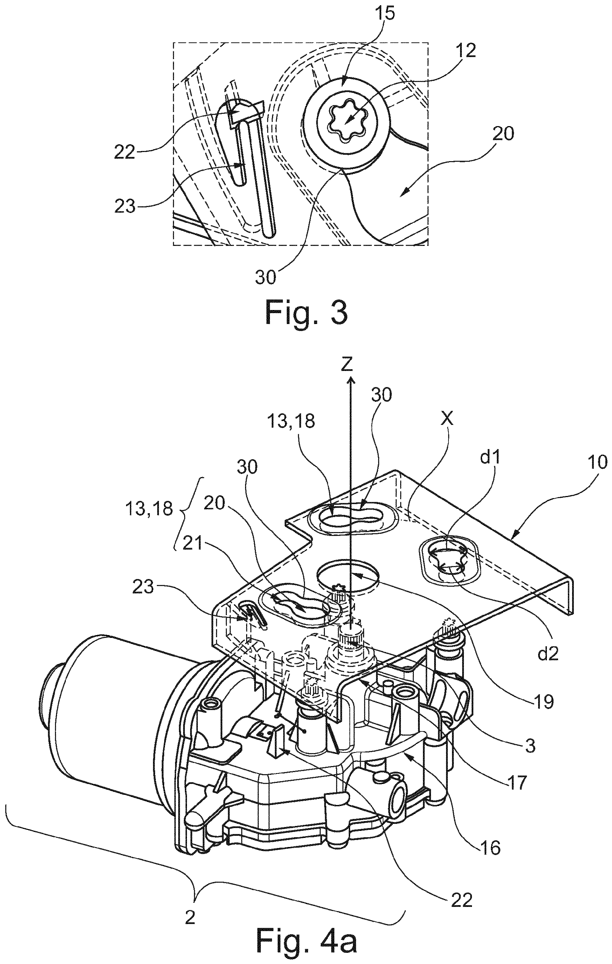

Dans ce mode de réalisation, le bloc moteur 2 comporte, sur son carter 16 et plus particulièrement sur la face de fixation 32, des premiers éléments de fixation 12 aptes à coopérer avec des deuxièmes éléments de fixation 13 ménagés dans la platine de support 10, de manière à adopter une position d'insertion par une première opération de translation selon une direction parallèle à l'axe Z de l'arbre d'entrainement 3 (référencé sur les figures 4a à 4c) puis une position de verrouillage après rotation relative, par exemple d'un quart de tour, du bloc moteur 2 par rapport à la platine de support, autour dudit axe Z de l'arbre d'entrainement 3.

Les figures 2 et 3 illustrent plus particulièrement la coopération d'un premier élément de fixation 12 du bloc moteur 2 avec un deuxième élément de fixation 13 de la platine de support 10.

Au moins un des premiers éléments de fixation 12 est constitué d'une portion cylindrique 14 qui s'étend en saillie du carter 16 du bloc moteur et sur le pourtour de laquelle s'étend un collet 15 formant butée d'arrêt cylindrique. Les premiers éléments de fixation 12 peuvent être fixés sur le carter 16 ou rapportés sur celui-ci, par emmanchement en force ou par vissage, dans des fûts cylindriques de réception 31 dédiés à cet effet. Dans l'exemple illustré, l'extrémité libre des premiers éléments de fixation 12 est munie d'une tête de vissage à six branches pour faciliter leur mise en place dans les fûts de réception. Ledit collet 15 peut constituer avec la portion cylindrique 14 une pièce unique ou bien être réalisé séparément puis emmanché sur ladite portion cylindrique.

Au moins un des deuxièmes éléments de fixation 13 ménagés sur la platine de support comporte un orifice de positionnement 18 configuré pour coopérer avec un premier élément de fixation 12. Cet orifice de positionnement 18 comporte deux lumières de dimensions différentes et débouchant l'une dans la continuité de l'autre, avec une première lumière 20 qui est configurée et notamment dimensionnée pour laisser passage à un premier élément de fixation et une seconde lumière 21 qui est configurée pour retenir ce premier élément de fixation. Le fait que la première lumière débouche dans la seconde lumière permet de générer un chemin de guidage continu pour le premier élément de fixation 12 vers la seconde lumière dans laquelle il est retenu par encliquetage élastique. Ce chemin de guidage continu présente une direction d'allongement X et une largeur variable le long de cette direction d'allongement, constituant ainsi, à la jonction entre les deux lumières, une portion d'étranglement 30, dimensionnée pour retenir le premier élément de fixation lorsque celui-ci est retenu dans la seconde lumière 21, et déformable élastiquement pour laisser passage vers cette seconde lumière sous l'effet de la rotation relative du carter porteur des éléments de fixation par rapport à la platine de support porteuse de l'orifice de positionnement.

On comprend que la première lumière 20 doit présenter une largeur d1 au moins égale au diamètre extérieur du collet formant butée d'arrêt 15 des premiers éléments de fixation 12 du bloc moteur, afin de permettre le passage de la butée d'arrêt dans l'orifice de positionnement sous l'effet d'une translation perpendiculaire au plan de la platine de support, et que la seconde lumière 21 doit présenter une largeur d2, inférieure à la largeur d1 de la première lumière, au moins égal au diamètre extérieur de la portion cylindrique 14 de ces premiers éléments de fixation, afin de loger le premier élément de fixation correspondant après rotation relative du bloc moteur par rapport à la platine de support.

Dans l'exemple illustré, la première lumière 20 est circulaire et présente un diamètre d1 supérieure à la largeur, perpendiculairement à la direction d'allongement X du chemin de guidage, de la seconde lumière 21.

La figure 3 illustre plus en détail la position de verrouillage irréversible d'un premier élément de fixation 12 dans une seconde lumière 21 d'un orifice de positionnement 18, ladite position étant sécurisée par coopération par encliquetage d'une lame souple 23 articulée sur la platine de support autour d'un axe sensiblement parallèle à la direction de l'arbre d'entrainement, autour d'un plot de butée 22, ou accroche de verrouillage, agencé en saillie du carter 16 du bloc moteur. La lame souple 23 est réalisée en saillie de la seconde face de la platine de support, c'est-à-dire la face en regard du carter 16 du bloc moteur 2. L'élasticité de la lame souple est obtenue par découpage de matière dans l'épaisseur de la platine de support 10.

Tel que cela sera détaillé ci-après, un premier élément de fixation 12 est configuré pour être inséré dans le deuxième élément de fixation par un mouvement de translation, puis pour être verrouillé dans une portion du deuxième élément de fixation sous l'effet d'un mouvement de rotation relatif des pièces portant ces éléments de fixation.

Le collet 15, par son diamètre extérieur supérieur à celui de la portion cylindrique 14, maintient les premiers éléments de fixation 12 dans les deuxièmes éléments de fixation 13 après encliquetage élastique desdits premiers éléments de fixation dans l'orifice de positionnement 18, en particulier dans la seconde lumière 21. Les figures 2 et 3 illustrent l'agencement final desdits éléments de fixation 12 et 13, après insertion et verrouillage d'un premier élément de fixation 12 dans un orifice de positionnement 18 ménagé dans la platine de support 10.

Les figures 4a à 4c illustrent l'agencement du dispositif conforme à l'invention ainsi que les étapes successives de montage de la structure. Dans le mode de réalisation illustré par la figure 4a, on distingue, d'une part, le carter 16 du bloc moteur 2 porteur, au niveau de sa face de fixation 32, de trois premiers éléments de fixation 12, d'un arbre d'entrainement 3 agencé dans un fût cylindrique 17 de section circulaire apte à guider en rotation ledit arbre d'entrainement 3 autour de son axe Z et d'une accroche de verrouillage 22 et on distingue d'autre part la platine de support 10 dans laquelle sont agencés des deuxièmes éléments de fixation 13 ainsi qu'une lame souple 23. Les deuxièmes éléments de fixation 13 de la platine de support 10 sont ici constitués de trois orifices de positionnement 18, chacun apte à recevoir un premier élément de fixation 12.

Par ailleurs, la platine de support 10 comporte un orifice complémentaire 19 apte à recevoir le fût cylindrique 17 de l'arbre d'entrainement 3.

Les trois premiers éléments de fixation 12, aptes à s'insérer respectivement dans un des orifices de positionnement 18 de la platine de support 10, sont régulièrement répartis angulairement autour de l'arbre d'entrainement 3 du bloc moteur 2, tandis que les trois deuxièmes éléments de fixation 13 sont régulièrement répartis autour de l'orifice complémentaire 19. L'écartement de ces premiers et deuxièmes éléments de fixation relativement à l'arbre d'entrainement et à l'orifice complémentaire est tel que lorsque l'on superpose la platine de support 10 et le bloc moteur 2, les premiers 12 et deuxièmes 13 éléments de fixation correspondent.

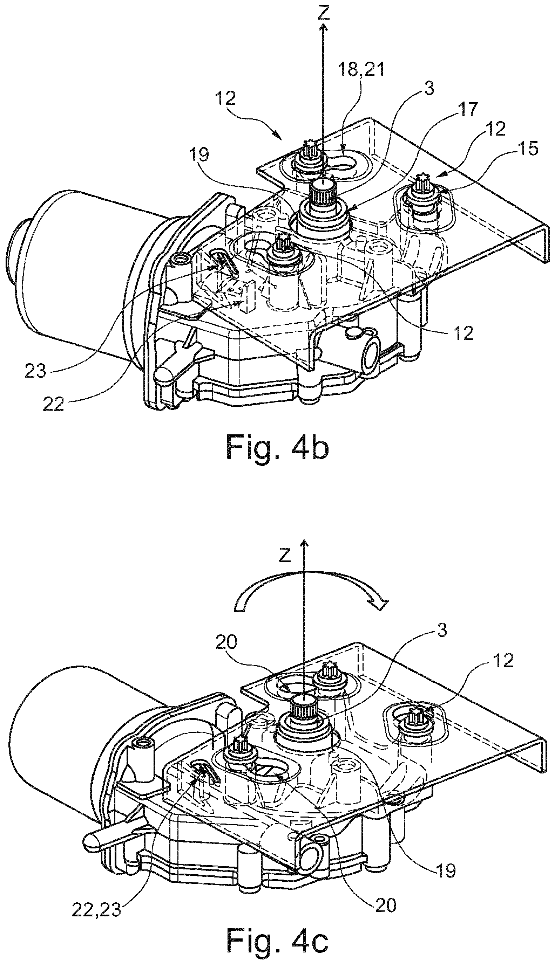

Les figures 4a et 4b illustrent l'insertion des premiers éléments de fixation 12 dans les deuxièmes éléments de fixation 13 où chaque collet 15 est apte à coopérer avec chaque première lumière 20 des orifices de positionnement 13 de la platine 10, par translation selon une première direction parallèle à l'axe Z de l'arbre d'entrainement 3, de manière à adopter une position d'insertion illustrée par la figure 4b. Lors de ce mouvement de translation, le fût cylindrique 17 comprenant l'arbre d'entrainement 3 s'insère simultanément dans l'orifice complémentaire 19 suivant l'axe Z dudit arbre d'entrainement 3, ledit orifice complémentaire 19 étant suffisamment grand pour laisser passage dudit fût cylindrique et pour permettre la rotation relative de la platine de support et du bloc moteur.

La figure 4c illustre la position de verrouillage des premiers éléments de fixation 12 dans les deuxièmes éléments de fixation 13 après rotation relative du bloc moteur 2 par rapport à la platine de support, autour dudit axe Z de l'arbre d'entrainement 3, telle qu'elle est représentée par la flèche R. Cette rotation relative, qui peut notamment être réalisée par rotation du bloc moteur 2 autour dudit axe Z par rapport à une platine de support fixe, permet le déplacement de chaque portion cylindrique 14 des premiers éléments de fixation 12 dans chaque seconde lumière 21 des orifices de positionnement 18 de la platine de support 10, en forçant le passage de la portion d'étranglement 30. La réduction de section du chemin de guidage dans cette portion d'étranglement permet par la suite le maintien de la portion cylindrique dans la seconde lumière, en combinaison avec la présence du collet 15 formant la butée d'arrêt qui empêche les premiers éléments de fixation 12 de s'échapper de la seconde lumière 21 selon une direction perpendiculaire au plan dans lequel s'inscrit le mouvement de rotation relative.

La rotation relative du carter 16 du bloc moteur 2 par rapport à la platine de support 10 assure simultanément la coopération d'un plot de butée 22 agencé en saillie du carter 16 avec la lame souple 23 formée dans la platine de support.

Selon une caractéristique particulière de l'invention, on vise à orienter les deuxièmes éléments de fixation pour que les efforts générés par la rotation du moteur électrique en cours de fonctionnement du dispositif d'essuie-glace aient tendance à pousser les premiers éléments de fixation vers le fond des secondes lumières 21 des orifices de positionnement 18. De la sorte, les deuxièmes éléments de fixation sont agencés de telle façon que les secondes lumières prolongent les premières lumières en étant disposées après ces premières lumières dans le sens de rotation moteur électrique.

La platine de support 10 est constituée d'un matériau plastique dont les propriétés élastiques permettent une déformation des éléments d'encliquetage définis par la portion d'étranglement 30 entre les deux lumières et par la lame souple 23, et un encliquetage élastique de ces éléments avec respectivement les premiers éléments de fixation et la butée 22.

Plus précisément, la portion d'étranglement 30 est déformable de sorte que, lors de la rotation relative du bloc moteur 2 par rapport à la platine de support, cette portion d'étranglement peut s'élargir pour laisser passage à la portion cylindrique 14 vers la seconde lumière 21, sous l'effet d'un effort de pression automatisé ou manuel suffisant, étant entendu que la portion d'étranglement est élastique pour reprendre sa forme d'origine après passage de la portion cylindrique et pour ainsi bloquer les premiers éléments de fixation 12 dans une position de verrouillage irréversible.

La lame souple 23, elle, est apte à s'escamoter, lors de la rotation relative du bloc moteur 2 par rapport à la platine de support, au contact de la butée 22 qui est agencée sur le carter pour se trouver sur le chemin de la lame souple. L'élasticité de la lame souple 23 permet à celle-ci de s'effacer au contact de la butée pour permettre de finir la rotation, puis de reprendre sa position d'origine à la fin de ladite rotation de manière à venir en contact avec la face arrière de ladite butée et empêcher toute rotation en sens inverse.

La figure 5 illustre le dispositif selon l'invention en position de verrouillage, dans une variante de réalisation, dans laquelle la position de verrouillage est sécurisée encore par serrage d'une vis d'arrêt 25 dans un fût cylindrique creux 24 localisé sur le carter 16 du bloc moteur 2. Ledit système fût cylindrique/vis d'arrêt peut être positionné, par exemple, à proximité du fût cylindrique 17 comprenant l'arbre d'entrainement 3 du bloc moteur 2.

On va maintenant décrire un mode de mise en oeuvre du procédé de montage du dispositif d'essuie-glace 1 pour panneau vitré avant de véhicule automobile. Ce procédé comporte notamment une étape d'insertion des premiers éléments de fixation du bloc moteur dans les deuxièmes éléments de fixation de la platine de support, et une étape de verrouillage de ces éléments.

L'étape d'insertion, illustrée par les figures 4a et 4b, est réalisée par une translation, selon une première direction, des premiers éléments de fixation 12 du bloc moteur 2 dans les deuxièmes éléments de fixation 13 de la platine de support 10. Tel que précédemment décrit, cette translation peut être avantageusement effectuée selon une direction parallèle à l'axe Z de l'arbre d'entrainement 3. Dans cette étape d'insertion, on ajuste la position angulaire du bloc moteur par rapport à la platine de support de manière à ce que les premiers éléments de fixation 12 ménagés sur le bloc moteur 2 soient insérés dans chaque première lumière 20 des deuxièmes éléments de fixation 13 de la platine de support.

L'étape ultérieure de verrouillage, illustrée par la figure 4c, est réalisée par une rotation relative du bloc moteur par rapport à la platine, autour d'un axe parallèle à la première direction de translation, de manière à ce que chaque premier élément de fixation 12 coopère avec une seconde lumière 21 des deuxièmes éléments de fixation 13 de la platine de support. L'étape de verrouillage consiste notamment en l'encliquetage élastique des éléments de fixation ensemble, par l'intermédiaire notamment d'une portion d'étranglement 30. On peut également prévoir qu'en fin de rotation relative du bloc moteur par rapport à la platine, un encliquetage additionnel soit réalisé, et notamment par coopération de la lame souple 23 ménagée sur la face de la platine en regard du carter 16 et du plot de butée 22 ménagé en saillie du carter.

Le procédé de montage peut comprendre, en outre, une étape additionnelle, illustrée par la figure 5, de serrage de la platine contre le carter du bloc moteur, par l'intermédiaire de la vis d'arrêt 25 dans le fût complémentaire 24 agencé sur le carter 16 du bloc moteur 2.

La description qui précède explique clairement comment l'invention permet d'atteindre les objectifs qu'elle s'est fixée et notamment de proposer une structure alternative d'un dispositif d'essuie-glace d'un panneau vitré avant d'un véhicule automobile qui, par un agencement et une coopération de premiers éléments de fixation du bloc moteur avec des deuxièmes éléments de fixation de la platine de support constituant des moyens d'encliquetage élastique, permet d'augmenter la fiabilité dudit dispositif en le maintenant dans une position verrouillée irréversible. La présente invention n'est pas limitée aux modes de réalisation donnés à titre d'exemples non limitatifs.

## Revendications

1. Dispositif d'essuie-glace (1) pour panneau vitré avant de véhicule automobile comprenant au moins :
- un bloc moteur (2) comportant au moins un carter (16) en saillie duquel s'étend un arbre d'entrainement (3) entraîné en rotation en sortie d'un moteur logé dans le carter (16),
- des moyens d'entrainement (4) configurés pour mettre en mouvement deux bras d'essuie-glace en fonction du mouvement de rotation de l'arbre d'entraînement (3),
- une platine de support (10) configurée pour supporter d'une part le bloc moteur (2) et d'autre part des tiges (8) de support de bras d'essuie-glace, la platine comportant par ailleurs des organes de rattachement (11) au corps du véhicule,
**caractérisé en ce que** ledit bloc moteur (2) et la platine de support (10) comportent des éléments de fixation (12, 13, 30, 22, 23) configurés pour coopérer par encliquetage élastique sous l'effet d'une rotation relative du carter (16) du bloc moteur par rapport à la platine de support.

2. Dispositif selon la revendication 1, **caractérisé en ce qu'**il comporte des premiers et deuxièmes éléments de fixation (12,13), lesdits premiers éléments de fixation étant ménagés dans le carter (16) pour coopérer avec les deuxièmes éléments de fixation (13) ménagés dans la platine de support (10).

3. Dispositif selon la revendication 2, **caractérisé en ce que** les premiers éléments de fixation (12) du bloc moteur (2) sont constitués d'au moins un élément en saillie du carter (16) et comportant une portion cylindrique (14) qui prolonge ce carter (16) et sur le pourtour de laquelle s'étend un collet (15) formant butée d'arrêt cylindrique.

4. Dispositif selon l'une quelconque des revendications 2 ou 3, **caractérisé en ce que** les deuxièmes éléments de fixation (13) ménagés sur la platine de support (10) sont constitués d'au moins un orifice de positionnement (18) configuré pour coopérer avec l'au moins un élément en saillie du carter.

5. Dispositif selon la revendication précédente, **caractérisé en ce que** l'orifice de positionnement (18) comporte deux lumières (20,21) de dimensions différentes et débouchant l'une dans la continuité de l'autre, de manière à former un chemin de guidage continu de direction d'allongement X et de largeur variable le long de cette direction d'allongement.

6. Dispositif selon la revendication précédente, **caractérisé en ce qu'**une première lumière (20) présente une largeur au moins égale au diamètre extérieur du collet formant butée d'arrêt (15) des premiers éléments de fixation (12) du bloc moteur (2), ladite première lumière (20) étant prolongée par la seconde lumière (21) qui présente une largeur inférieure à la largeur de la première lumière mais au moins égal au diamètre extérieur de la portion cylindrique (14) desdits premiers éléments de fixation (12).

7. Dispositif selon l'une quelconque des revendications 2 à 6, **caractérisé en ce que** le bloc moteur (2) comporte au moins trois premiers éléments de fixation (12) aptes à s'insérer respectivement dans un orifice de positionnement (18) de la platine de support (10), les trois premiers éléments de fixation (12) étant de préférence régulièrement répartis angulairement autour de l'arbre d'entrainement (3) du bloc moteur (2).

8. Dispositif selon l'une quelconque des revendications précédentes, **caractérisé en ce que** la platine de support (10) est constituée d'une matière plastique.

9. Dispositif selon la revendication précédente, en combinaison avec la revendication 5, **caractérisé en ce que** la platine de support (10) comporte un élément d'encliquetage formé par une portion d'étranglement (30) entre la première (20) et la deuxième (21) lumière.

10. Dispositif selon la revendication 8 ou 9, **caractérisé en ce que** la platine de support (10) comporte un élément d'encliquetage formé par une lame souple (23), la lame souple (23) étant de préférence articulée pour coopérer par encliquetage avec un plot de butée (22) agencé en saillie du carter (16) du bloc moteur.

11. Procédé de montage d'un dispositif d'essuie-glace (1) pour panneau vitré avant de véhicule automobile selon l'une des revendications précédentes, comprenant au moins :
- une étape d'insertion, par translation selon une première direction, des premiers éléments de fixation (12) du bloc moteur (2) dans les deuxièmes éléments de fixation (13) de la platine de support (10),
- une étape de verrouillage par encliquetage élastique des éléments de fixation, par rotation relative du bloc moteur par rapport à la platine, autour d'un axe parallèle à la première direction de translation.

12. Procédé de montage selon la revendication précédente, pour le montage d'un dispositif d'essuie-glace (1) selon l'une des revendications 1 à 10, au cours duquel l'étape d'insertion se fait par translation selon une direction parallèle à l'axe Z de l'arbre d'entrainement (3).

13. Procédé de montage selon la revendication 12 ou 13, pour le montage d'un dispositif d'essuie-glace (1) selon la revendication 7, au cours duquel, lors de l'étape d'insertion par translation, les premiers éléments de fixation (12) ménagés sur le bloc moteur (2) sont insérés dans chaque première lumière (20) des deuxièmes éléments de fixation (13) de la platine de support (10), l'étape de verrouillage consistant en la coopération de chaque premier élément de fixation avec une seconde lumière (21) des deuxièmes éléments de fixation (13) de la platine de support.

14. Procédé de montage selon l'une des revendications 11 à 13, **caractérisé en ce que** l'étape de verrouillage consiste en outre en l'encliquetage élastique d'une lame souple (23) ménagée sur la face de la platine en regard du carter (16) et d'un plot de butée (22) ménagé en saillie du carter.

15. Procédé de montage selon l'une des revendications 11 à 14, **caractérisé en ce qu'**il contient une étape additionnelle de serrage de la platine contre le carter du bloc moteur, par l'intermédiaire d'une vis d'arrêt (25) dans un fût complémentaire (24) agencé sur le carter (16) du bloc moteur (2).
